# EUROPÄISCHE PATENTANMELDUNG

(11) **EP 1 954 055 A2**
(43) Veröffentlichungstag der Anmeldung: **06.08.2008**
(21) Anmeldenummer: 08100971.4
(22) Anmeldetag: 28.01.2008
(51) Int. Cl.: H04N 7/24, H04N 5/50

(54) **Verfahren zum Betrieb eines Rundfunkempfängers und Rundfunkempfänger zur Durchführung des Verfahrens**

(30) Priorität: 02.02.2007 AT 1752007
(71) Anmelder: ROBUST Electronics GmbH, 1220 Wien (AT)
(72) Erfinder: Trizl, Bernhard, 2000, Oberzögersdorf (AT)
(74) Vertreter: Pröll, Jürgen

(57) **Zusammenfassung**

Die vorliegende Erfindung betrifft ein Verfahren sowie einen Rundfunkempfänger zur Durchführung des Verfahrens, mittels welchem bei einem Programmwechsel eine beschleunigte Darstellung von Bildern des neu ausgewählten Programms ermöglicht wird. Hierzu werden alle Rundfunkprogramme durchsucht und Bilder aus den Rundfunkprogrammen abgespeichert und diese gespeicherten Bilder während eines Umschaltvorganges dargestellt.

## Beschreibung

Die vorliegende Erfindung betrifft ein Verfahren sowie einen Rundfunkempfänger zur Durchführung des Verfahrens, mittels welchem bei einem Programmwechsel eine beschleunigte Darstellung von Bildern des neu ausgewählten Programms ermöglicht wird, gemäß den Merkmalen der Patentansprüche 1, 2, 3, 12, 13 oder 14.

Heutzutage ist die Übertragung von digitalen Rundfunksignalen Stand der Technik. So hat sich insbesondere europaweit der DVB-Standard zur digitalen Übertragung von Rundfunkprogrammen etabliert. Bei der digitalen Rundfunksignalübertragung werden mehrere Rundfunkprogramme in einem sogenannten Transportdatenstrom zusammengefasst und übertragen.

Ein Rundfunksignal besteht aus mehreren Transportströmen. Derzeitig können beispielsweise über Satellit mittels eines Rundfunksignals mehrere hundert Programme übertragen und von einem Rundfunkempfänger empfangen werden. Hierzu werden in einem Rundfunksignal mehrere Transportdatenströme zusammengefasst, in welchen die Rundfunkprogramme enthalten sind. Es sind in einem Transportdatenstrom mehrere Rundfunkprogramme zusammengefasst. Zur Übertragung werden die digital vorliegenden Programminhalte der Rundfunkprogramme beispielsweise einer COFDM-Modulation unterzogen und liegen dann verschachtelt in den jeweiligen Transportdatenströmen vor. Um die Programminhalte zu übertragen und um insbesondere die übertragenen Datenmengen zu reduzieren, hat sich für die Bewegtbildübertragung der MPEG-Videostandard etabliert, aktuell mit Layer 2. Das zu den Bewegtbilddaten zugehörige Audiosignal bzw. die Audiosignale werden ebenfalls in digitaler und komprimierter Form im Transportdatenstrom übertragen.

Empfängerseitig wird das Rundfunksignal empfangen. Es wird aus dem Rundfunksignal mindestens ein Transportdatenstrom ausgewählt, dieser wird dann einem Multiplexvorgang unterzogen und die degemultiplexten Daten werden dann im Rahmen eines Decodiervorganges aufbereitet. Das hieraus jeweils entstehende Rundfunkprogramm wird dann einer Anzeigevorrichtung eines Fernsehempfangsgerätes zugeführt und dargestellt.

Aus EP 0 964 576 A1 sind ein Verfahren und eine Vorrichtung zum Empfang von digitalen Videosignalen bekannt. Dieses Verfahren dient zum Empfang eines ersten Videosignals, das ein Hauptbild darstellt, und eines zweiten Videosignals, das ein Bild-im-Bild-Signal darstellt, wobei das zweite Videosignal ein komprimiertes digitales Videosignal ist, wie z.B. ein MPEG-Elementarstrom, das autonom codierte Bilder sowie prädiktiv codierte Bilder enthält. Verfahrensgemäß werden die Daten selektiert und decodiert und nur die autonom codierten Bilder zur Wiedergabe als Bild-im-Bild verwendet.

Aus EP 0 700 561 A1 sind ein Bildanzeigesystem und ein Mehrfensterbildanzeigeverfahren offenbart. Hierbei sind Empfangsmittel zum Empfang von Eingangsvideosignalen vorhanden. Es ist außerdem ein Speicher mit einer Anzahl von Speicherzellen zum Speichern von Pixelinformationen vorgesehen. Im Weiteren sind Auslesemittel vorhanden, welche die Speicherstellen des eingangs genannten Speichers auslesen und zum Bilden eines Ausgangsvideosignals verwenden.

Nachteilig bei den bekannten Vorrichtungen und Verfahren ist es jedoch, dass beim Wechsel eines Rundfunkprogramms auf ein anderes, initiiert durch einen Benutzer, eine kurzzeitige Signalunterbrechung und Darstellungsunterbrechung erfolgen, häufig in Form eines Schwarzbildes. Erfahrungsgemäß benötigt der Vorgang zum Wechsel eines Rundfunkprogramms auf ein anderes Rundfunkprogramm eine gewisse Zeit. Dies ist bedingt durch die Umschaltung auf einen anderen Transportdatenstrom und/oder durch die notwendige Umschaltung des Decodiervorgangs und des Demultiplexers. Die Auswahl eines anderen Transportstroms und/oder eines anderen Rundfunkprogramms benötigt eine gewisse Zeit, die Daten müssen empfangen und decodiert werden. In diesem Zeitraum können keine Bildsignale dargestellt werden.

Aufgabe der vorliegenden Erfindung ist es, ein Verfahren und eine zugehörige Vorrichtung aufzuzeigen, welche mit bereits in einem Empfänger für digitale Rundfunksignale vorhandenen Mitteln zur Decodierung eines empfangenen digitalen Transportdatenstroms und zur Demultiplexierung während des Wechsels von einem Rundfunkprogramm zu einem anderen zumindest ein Bild des neu ausgewählten Rundfunkprogramms zur Darstellung bereitstellt, wodurch ein Nutzer sofort erkennt, dass der Programmwechsel erfolgt und wobei zusätzlich die Darstellung eines Schwarzbildes unterbleibt.

Diese Aufgabe wird anhand der Merkmale der Ansprüche 1, 2, 3, 12, 13 oder 14 gelöst.

Vorteilhafte Ausgestaltungen der Erfindung ergeben sich anhand der abhängigen Ansprüche, der weiteren Beschreibung sowie der beigefügten Figuren.

Das Verfahren nach Anspruch 1 zeichnet sich dadurch aus, dass es zum Betrieb eines Rundfunkempfängers zum Empfang eines Rundfunksignals, welcher von einem Sender in digital codierter Form übertragen wird, geeignet ist, wobei das Rundfunksignal mindestens einen Transportdatenstrom und jeder Transportdatenstrom mindestens ein Rundfunkprogramm enthält, mit folgenden Verfahrensschritten:
- Empfang des Rundfunksignals,
- Auswahl eines Transportdatenstroms aus dem Rundfunksignal,
- Demultiplexen des ausgewählten Transportdatenstromes, so dass alle im ausgewählten Transportdatenstrom enthaltenen Rundfunkprogramme in degemultiplexter Form vorliegen,
- Auswahl eines Rundfunkprogramms aus dem Transportdatenstrom zur Darstellung auf einer Anzeigeeinheit,
- Zuführung des zur Darstellung ausgewählten Rundfunkprogramms an einen Decoder zur Decodierung der dem Rundfunkprogramm zugehörigen Daten,
- Übergabe der decodierten, dem Rundfunkprogramm zugehörigen Daten an die Darstellungseinheit,
- Durchsuchen der weiteren, nicht zur Darstellung ausgewählten degemultiplexten Rundfunkprogramme des ausgewählten Transportdatenstroms nach in diesen enthaltenen codierten Bildern,
- Decodierung dieser Bilder und Speicherung in einem Speicher mit Zuordnung einer Kennung für jedes Rundfunkprogramm zu den gespeicherten Bildern,
wobei bei jeder Initiierung eines Wechsels der Darstellung des aktuell auf der Darstellungseinheit dargestellten Rundfunkprogramms auf ein anderes Rundfunkprogramm des ausgewählten Transportdatenstromes das diesem Rundfunkprogramm zugeordnete und im Speicher gespeicherte Bild aus diesem ausgelesen und der Darstellungseinheit übergeben wird, wodurch bereits ein Bild des neu ausgewählten Rundfunkprogramms dargestellt wird, während der Rundfunkempfänger auf das neu ausgewählte Rundfunkprogramm umgeschaltet wird.

Das Verfahren nach Anspruch 2 zeichnet sich dadurch aus, dass es zum Betrieb eines Rundfunkempfängers zum Empfang eines Rundfunksignals, welcher von einem Sender in digital codierter Form übertragen wird, geeignet ist, wobei das Rundfunksignal mindestens einen Transportdatenstrom und jeder Transportdatenstrom mindestens ein Rundfunkprogramm enthält, wobei der Rundfunkempfänger zwei Empfangseinheiten enthält, mit folgenden Verfahrensschritten:
a. Empfang des Rundfunksignals,
b. Auswahl mindestens eines Transportdatenstroms aus dem Rundfunksignal und Zuweisung an die erste Empfangseinheit,
c. Demultiplexen des ausgewählten Transportdatenstromes, so dass alle im ausgewählten Transportdatenstrom enthaltenen Rundfunkprogramme in degemultiplexter Form vorliegen,
d. Auswahl eines Rundfunkprogramms aus dem Transportdatenstrom zur Darstellung auf einer Anzeigeeinheit,
e. Zuführung des zur Darstellung ausgewählten Rundfunkprogramms an einen Decoder zur Decodierung der dem Rundfunkprogramm zugehörigen Daten,
f. Übergabe der decodierten, dem Rundfunkprogramm zugehörigen Daten an die Darstellungseinheit,
g. Durchsuchen der weiteren, nicht zur Darstellung ausgewählten degemultiplexten Rundfunkprogramme des ausgewählten Transportdatenstroms nach in diesen enthaltenen codierten Bildern,
h. Decodierung dieser Bilder und Speicherung in einem Speicher mit Zuordnung einer Kennung für jedes Rundfunkprogramm zu den gespeicherten Bildern,
i. Zuweisen eines weiteren Transportdatenstroms an die zweite Empfangseinheit,
j. Demultiplexen dieses Transportdatenstromes und Durchsuchen der im Transportdatenstrom enthaltenen Rundfunkprogramme nach enthaltenen codierten Bildern;
k. Decodierung dieser Bilder und Speicherung im Speicher mit Zuordnung der Kennung für jedes Rundfunkprogramm zu den gespeicherten Bildern,
l. Kontinuierliche Fortsetzung der Schritte Lit i bis Lit k,
wobei bei jeder Initiierung eines Wechsels der Darstellung des aktuell auf der Darstellungseinheit dargestellten Rundfunkprogramms auf ein anderes Rundfunkprogramm das diesem Rundfunkprogramm zugeordnete und im Speicher gespeicherte Bild aus dem Speicher ausgelesen und der Darstellungseinheit übergeben wird, wodurch bereits ein Bild des neu ausgewählten Rundfunkprogramms dargestellt wird, während der Rundfunkempfänger auf das neu ausgewählte Rundfunkprogramm umgeschaltet wird.

Das Verfahren nach Anspruch 3 zeichnet sich dadurch aus, dass das Verfahren zum Betrieb eines Rundfunkempfängers zum Empfang eines Rundfunksignals geeignet ist, welcher von einem Sender in digital codierter Form übertragen wird, wobei das Rundfunksignal mindestens einen Transportdatenstrom und jeder Transportdatenstrom mindestens ein Rundfunkprogramm enthält, wobei der Rundfunkempfänger zwei Empfangseinheiten enthält, und in einem Programmplatzspeicher die Rundfunkprogramme auf Programmplatznummern gespeichert sind, mit folgenden Verfahrensschritten:
- Empfang des Rundfunksignals,
- Auswahl mindestens eines Transportdatenstroms aus dem Rundfunksignal und Zuweisung an die erste Empfangseinheit,
- Demultiplexen des ausgewählten Transportdatenstromes, so dass alle im ausgewählten Transportdatenstrom enthaltenen Rundfunkprogramme in degemultiplexter Form vorliegen,
- Auswahl eines Rundfunkprogramms aus dem Transportdatenstrom zur Darstellung auf einer Anzeigeeinheit,
- Zuführung des zur Darstellung ausgewählten Rundfunkprogramms an einen Decoder zur Decodierung der dem Rundfunkprogramm zugehörigen Daten,
- Übergabe der decodierten, dem Rundfunkprogramm zugehörigen Daten an die Darstellungseinheit,
- Durchsuchen einer vorgegebener Anzahl von Rundfunkprogrammen, welche dem zur Darstellung ausgewählten degemultiplexten Rundfunkprogramm im Programmplatzspeicher vorausgehend und/oder nachfolgend abgespeichert sind, nach in diesen enthaltenen codierten Bildern,
- Decodierung dieser Bilder und Speicherung in einem Speicher mit Zuordnung einer Kennung für das jeweilige Rundfunkprogramm zu den gespeicherten Bildern,
wobei bei jeder Initiierung eines Wechsels der Darstellung des aktuell auf der Darstellungseinheit dargestellten Rundfunkprogramms auf ein anderes Rundfunkprogramm der Speicher nach einem zum Rundfunkprogramm gespeicherten Bild durchsucht wird und beim Vorhandensein eines solchen Bildes dieses aus dem Speicher ausgelesen und der Darstellungseinheit übergeben wird, wodurch bereits ein Bild des neu ausgewählten Rundfunkprogramms dargestellt wird, während der Rundfunkempfänger auf das neu ausgewählte Rundfunkprogramm umgeschaltet wird.

Vorteilhaft gemäß der Ausführung nach Anspruch 4 ist, dass nicht alle empfangbaren Rundfunkprogramme, sondern nur eine definierte Anzahl von Rundfunkprogrammen durchsucht werden müssen.

Vorteilhaft gemäß der Ausführung nach Anspruch 5 ist, dass nach den Gewohnheiten der Bedienung und Benutzung eines Nutzers das Verfahren angepasst werden kann, indem die vorgegebene Anzahl von Rundfunkprogrammen im Programmspeicherplatz aufsteigender Nummer größer als die Anzahl der im Programmspeicherplatz absteigender Nummer gewählt wird.

Vorteilhaft gemäß der Ausführung nach Anspruch 6 ist, dass nur ein Mikrocomputer eingesetzt werden muss und somit das Durchsuchen der nicht zur Darstellung ausgewählten degemultiplexten Rundfunkprogramme von einem Mikrocomputer vorgenommen wird, welcher zugleich die Steuerung des Rundfunkempfängers vornimmt.

Vorteilhaft gemäß der Ausführung nach Anspruch 7 ist, dass die Mikrocomputereinheit Zusatzaufgaben ausführt und somit besser ausgelastet ist und zusätzliche Baugruppen entbehrlich sind, da die Decodierung der Bilder der nicht zur Darstellung ausgewählten degemultiplexten Rundfunkprogramme von dem Mikrocomputer vorgenommen wird, wobei die Decodierung des ausgewählten Rundfunkprogramms von einem Hardwaredecoder vorgenommen wird.

Vorteilhaft gemäß der Ausführung nach Anspruch 8 ist, dass der Speicher in der Größe seines Speicherplatzes begrenzbar ist, indem die Bilder im Speicher kontinuierlich von neuen Bildern überschrieben werden.

Vorteilhaft gemäß der Ausführung nach Anspruch 9 ist, dass der Mikrocomputer in Form einer Mikrocomputereinheit ausgestaltet wird und somit ein Speicher in der Mikrocomputereinheit mitverwendet werden kann.

Vorteilhaft gemäß der Ausführung nach Anspruch 10 ist, dass mittels eines Unterprogramms, welches auf der Mikrocomputereinheit implementierbar ist, eine Decodierung erfolgen kann und weitere Hardwarebaugruppen nicht benötigt werden, dass die Bilder I-Frames sind und diese von der Mikrocomputereinheit mittels einer auf der Mikrocomputereinheit implementierten Softwareroutine decodiert werden.

Vorteilhaft gemäß der Ausführung nach Anspruch 11 ist, dass durch eine direkte Angabe der Speicherstelle an die Videoengine ein direkter Zugriff erfolgen kann. Der Videoengine wird von der Mikrocomputereinheit die Startadresse im Speicher übergeben, ab welcher der I-Frame abgelegt ist, der dem Rundfunkprogramm, auf welches umgeschaltet wird, zugeordnet ist, und dieser I-Frame von der Videoengine auf der Anzeigevorrichtung vom Hardwaredecoder dargestellt wird. Dies führt zu einer schnelleren Ausführung der Darstellung.

Das Rundfunkgerät gemäß Anspruch 11, das mit einem Rundfunkempfänger, einer Mikrocomputereinheit, einem Hardwaredecoder, einem Speicher und einem Demultiplexer ausgestattet ist, zeichnet sich dadurch aus, dass der Rundfunkempfänger von einem Sender zumindest ein in digital codierter Form übertragenes Rundfunksignal empfängt, wobei das mindestens eine Rundfunksignal mindestens einen Transportdatenstrom und jeder Transportdatenstrom mindestens ein Rundfunkprogramm enthält, und auf Eingabe eines Nutzers die Mikrocomputereinheit einen Transportdatenstrom aus dem Rundfunksignal auswählt, dieser Transportdatenstrom vom Demultiplexer demultiplext wird, wodurch alle im ausgewählten Transportdatenstrom enthaltenen Rundfunkprogramme in degemultiplexter Form an den Ausgängen des Demultiplexers vorliegen und die Mikrocomputereinheit ein Rundfunkprogramm aus dem Transportdatenstrom zur Darstellung auf einer Anzeigevorrichtung an einen Hardwaredecoder leitet, der das Rundfunkprogramm decodiert und an eine Videoengine übergibt, welche das decodierte Rundfunkprogramm zur Darstellung auf einer Anzeigevorrichtung aufbereitet, wobei zusätzlich die Mikrocomputereinheit die weiteren, nicht zur Darstellung ausgewählten degemultiplexten Rundfunkprogramme des ausgewählten Transportdatenstroms nach in diesen enthaltenen codierten Bildern durchsucht und eines dieser Bilder in dem Speicher mit der Zuordnung einer Kennung für jedes Rundfunkprogramm zu den gespeicherten Bildern speichert, wobei bei einer Initiierung eines Wechsels des darzustellenden Rundfunkprogramms auf eines der anderen Rundfunkprogramme die Mikrocomputereinheit die Umschaltung vornimmt und zugleich den Speicher nach dem gespeicherten Bild, das dem anderen Rundfunkprogramm zugeordnet ist, durchsucht und dieses aus dem Speicher ausliest und der Videoengine zur Aufbereitung für die Darstellungsvorrichtung übergibt, wodurch bereits ein Bild des neu ausgewählten Rundfunkprogramms dargestellt wird, während die Umschaltung auf das neu ausgewählte Rundfunkprogramm erfolgt.

Das Rundfunkgerät nach Anspruch 13 ist mit mindestens zwei Rundfunkempfängern einer Mikrocomputereinheit, einem Hardwaredecoder, einem Speicher und mindestens zwei Demultiplexern ausgestaltet, wobei das Rundfunkgerät von einem Sender ein in digital codierter Form übertragenes Rundfunksignal empfängt, wobei das Rundfunksignal mindestens zwei Transportdatenströme aufweist und jeder Transportdatenstrom mindestens ein Rundfunkprogramm enthält und auf Eingabe eines Nutzers die Mikrocomputereinheit einen ersten Transportdatenstrom aus dem Rundfunksignal auswählt, der erste Demultiplexer diesen ersten Transportdatenstrom demultiplext, wodurch alle im ersten Transportdatenstrom enthaltenen Rundfunkprogramme in degemultiplexter Form an den Ausgängen des ersten Demultiplexers vorliegen, und die Mikrocomputereinheit ein erstes Rundfunkprogramm aus dem ersten Transportdatenstrom zur Darstellung auf einer Anzeigevorrichtung an einen Hardwaredecoder leitet, der das erste Rundfunkprogramm decodiert und an eine Videoengine übergibt, welche das decodierte erste Rundfunkprogramm zur Darstellung auf der Anzeigevorrichtung aufbereitet, wobei zusätzlich die Mikrocomputereinheit die weiteren, nicht zur Darstellung ausgewählten degemultiplexten Rundfunkprogramme des ersten ausgewählten Transportdatenstroms nach in diesen enthaltenen codierten Bildern durchsucht und ein Bild eines jeden, nicht zur Darstellung ausgewählten degemultiplexten Rundfunkprogramms in dem Speicher speichert mit der Zuordnung einer Kennung für jedes nicht zur Darstellung ausgewählten degemultiplexten Rundfunkprogramms, und der zweite Rundfunkempfänger den mindestens zweiten Transportdatenstrom empfängt und der zweite Demultiplexer den mindestens zweiten Transportdatenstrom demultiplext, die Mikrocomputereinheit die Rundfunkprogramme, die im mindestens zweiten Transportdatenstrom vorhanden sind, nach decodierten Bildern durchsucht und diese ebenfalls mit einer Kennung zum zugehörigen Rundfunkprogramm im Speicher speichert und bei einer Initiierung eines Wechsels des darzustellenden Rundfunkprogramms auf eines der anderen Rundfunkprogramme die Mikrocomputereinheit die Umschaltung vornimmt und zugleich im Speicher nach dem gespeicherten Bild, das dem anderen Rundfunkprogramm zugeordnet ist, durchsucht und aus dem Speicher ausliest und der Videoengine zur Aufbereitung für die Darstellungsvorrichtung übergibt, wodurch bereits ein Bild des neu ausgewählten Rundfunkprogramms dargestellt wird, während die Umschaltung auf das neu ausgewählte Rundfunkprogramm erfolgt.

Der Rundfunkgerät nach Anspruch 14 ist mit mindestens zwei Rundfunkempfängern, einer Mikrocomputereinheit, einem Hardwaredecoder, einem Speicher und mindestens zwei Demultiplexern und einem Programmplatzspeicher, in welchem jedem empfangbaren Rundfunkprogramm ein Programmspeicherplatz zuordenbar ist, ausgestattet, wobei das Rundfunkgerät von einem Sender ein in digital codierter Form übertragenes Rundfunksignal empfängt, wobei das Rundfunksignal mindestens zwei Transportdatenströme aufweist und jeder Transportdatenstrom mindestens ein Rundfunkprogramm enthält und auf Eingabe eines Nutzers die Mikrocomputereinheit einen ersten Transportdatenstrom aus dem Rundfunksignal auswählt, der erste Demultiplexer diesen ersten Transportdatenstrom demultiplext, wodurch alle im ersten Transportdatenstrom enthaltenen Rundfunkprogramme in degemultiplexter Form an den Ausgängen des ersten Demultiplexers vorliegen, und die Mikrocomputereinheit ein erstes Rundfunkprogramm aus dem ersten Transportdatenstrom zur Darstellung auf einer Anzeigevorrichtung an einen Hardwaredecoder leitet, der das erste Rundfunkprogramm decodiert und an eine Videoengine übergibt, welche das decodierte erste Rundfunkprogramm zur Darstellung auf der Anzeigevorrichtung aufbereitet, wobei zusätzlich die Mikrocomputereinheit die dem ersten Rundfunkprogramm, welches zur Darstellung auf der Anzeigevorrichtung aufbereitet wird, im Programmplatzspeicher nachfolgenden und/oder vorausgehenden Rundfunkprogramme nach in diesen enthaltenen codierten Bildern durchsucht und ein Bild eines jeden dieser Rundfunkprogramme in dem Speicher speichert mit der Zuordnung einer Kennung für jedes dieser Rundfunkprogramme unter Verwendung des zweiten Rundfunkempfängers, und bei einer Initiierung eines Wechsels des darzustellenden Rundfunkprogramms auf eines dieser Rundfunkprogramme die Mikrocomputereinheit die Umschaltung vornimmt und zugleich im Speicher nach dem gespeicherten Bild, das einem dieser Rundfunkprogramme zugeordnet ist, durchsucht und aus dem Speicher ausliest, soweit ein solches Bild gespeichert ist und der Videoengine zur Aufbereitung für die Darstellungsvorrichtung übergibt, wodurch bereits ein Bild des neu ausgewählten Rundfunkprogramms dargestellt wird, während die Umschaltung auf das neu ausgewählte Rundfunkprogramm erfolgt.

Vorteilhaft gemäß der Ausführung nach Anspruch 15 ist, dass eine kontinuierliche Durchsuchung des Rundfunksignals erfolgen kann, indem die Mikrocomputereinheit alle im Rundfunksignal enthaltenen Transportdatenströme mittels des zweiten Rundfunkempfängers empfängt und der zweite Demultiplexer diese demultiplext und die Mikrocomputereinheit alle im Transportdatenstrom enthaltenen Bilder von zugehörigen Rundfunkprogrammen mit Zuordnung einer Kennung im Speicher speichert.

Vorteilhaft gemäß der Ausführung nach Anspruch 16 ist, dass es sich um standardisierte Routinen handelt, da die Bilder, welche die Mikrocomputereinheit in den Rundfunkprogrammen sucht und im Speicher speichert, codierte Bilddaten sind und den I-Frames eines MPEG-codierten Videosignals entsprechen.

Vorteilhaft gemäß der Ausführung nach Anspruch 17 ist, dass der Speicher in seiner Dimensionierung relativ klein gewählt werden kann und dass die Mikrocomputereinheit die Bilder im Speicher kontinuierlich mit zeitlich nachfolgenden Bildern überschreibt.

Vorteilhaft gemäß der Ausführung nach Anspruch 18 ist, dass zusätzliche Baugruppen nicht benötigt werden, da die Decodierung der Bilder von der Mikrocomputereinheit mittels einer auf dieser implementierten Softwareroutine erfolgt.

Vorteilhaft gemäß der Ausführung nach Anspruch 19 ist, dass die Decodierung der Bilder nicht sofort beim Empfang, sondern zu einem späteren Zeitpunkt erfolgt und dadurch eine kontinuierliche Auslastung der Mikrocomputereinheit gegeben ist.

Vorteilhaft gemäß der Ausführung nach Anspruch 20 ist, dass eine schnellere Verarbeitung ermöglicht wird, indem die Mikrocomputereinheit der Videoengine die Startadresse im Speicher übergibt, ab welcher ein Bild liegt, das dem Rundfunkprogramm zugehört, auf welches umgeschaltet wird, damit dieses Bild von der Videoengine der Anzeigevorrichtung zur Darstellung übergeben werden kann, um dieses Bild darzustellen, bis das neu ausgewählte Rundfunkprogramm dargestellt wird.

Ein Rundfunksignal besteht typischerweise aus mehreren Transportdatenströmen, welche ineinander geschachtelt mehrere Programminhalte, sogenannte Rundfunkprogramme, aufweisen. Diese sind digital codiert und liegen im Transportdatenstrom codiert vor. Um die Programminhalte der Rundfunkprogramme verarbeiten und darstellen zu können, wird aus dem Rundfunksignal zunächst ein Transportdatenstrom ausgewählt. Anschließend erfolgt eine Auswahl eines Rundfunkprogramms aus dem ausgewählten Transportdatenstrom. Es ist ein Empfänger vorhanden, der das Rundfunksignal empfängt und die Daten zur weiteren Verarbeitung bereitstellt. Der Empfänger wird auf einen Transportdatenstrom initiiert, aus diesem Transportdatenstrom wird dann das ausgewählte Rundfunkprogramm gewählt. Der Transportdatenstrom wird hierzu zunächst einem Demultiplexer zugeführt. Der Demultiplexer löst aus dem Transportdatenstrom die einzelnen Rundfunkprogramme aus, welche dann in digitaler Form vorliegen. Von diesen durch Demultiplexierung gewonnenen Rundfunkprogrammen wird dann ein Rundfunkprogramm ausgewählt, welches dann mittels einer Decodierung auf einer Anzeigevorrichtung, welche weitere Signalaufbereitungsvorrichtungen aufweist, zur Darstellung übergeben wird. Bei der weiteren Signalaufbereitungsvorrichtung handelt es sich z.B. um eine sogenannte Videoengine mit einer nachgeschalteten Displayeinheit.

Die Inhalte der Rundfunkprogramme liegen, wie bereits ausgeführt, in digital codierter Form, insbesondere MPEGcodiert, vor.

Beim MPEG-Codierverfahren werden die einzelnen übertragenen Bilder eines Rundfunkprogramms unterschiedlich stark komprimiert und zu unterschiedlichen Zwecken genutzt. Die Bilder sind in drei Arten aufgeteilt, den I-Frames, den P-Frames und den B-Frames. Die I-Frames werden unabhängig von anderen Bildern komprimiert und sind an definierten Positionen im Datenstrom eines digitalen Rundfunkprogramms vorhanden. Auf diesen I-Frames basieren die nachfolgenden digital übertragenen Bilder, bei welchen nur die Veränderung der Bildinhalte zum vorherigen Bildinhalt und/oder nachfolgenden Bildinhalt übertragen wird. Daher benötigen die I-Frames relativ gesehen den größten Speicherplatz im Datenstrom. Diese I-Frames sind aber notwendig, um die von diesen Bildern abgeleiteten Bewegungsveränderungen in den nachfolgenden und/oder vorausgehenden Bildern darstellen zu können. Die weiteren Bilder im Datenstrom werden in Abhängigkeit von den anderen Bildern codiert und benötigen dadurch weniger Speicherplatz. Neben den I-Frames sind im Datenstrom P-Frames und B-Frames enthalten. Bei den P-Frames handelt es sich um Bildinformationen, welche zur Darstellung Informationen von vorausgegangenen I-Frames oder P-Frames benötigen. Diese P-Frames weisen einen weit höheren Kompressionsgrad auf als die I-Frames. Schließlich sind im Datenstrom noch B-Frames vorhanden. Diese B-Frames sind abhängig von vorausgegangenen und nachfolgenden I-Frames oder P-Frames. Diese Bilder weisen die höchste Kompressionsrate auf. Der Datenstrom eines Rundfunkprogramms besteht aus einem I-Frame und mehreren nachfolgenden P-Frames und B-Frames. Diese verschiedenen Frames sind typischerweise zyklisch als sogenannte Group of Pictures gefasst und reichen von einem I-Frame zum nächsten I-Frame, wobei diese typischerweise eine Länge von einer halben Sekunde haben. Im Header einer Group of Pictures sind weitere Daten vorhanden, wobei es sich unter anderem um den Videotimecode sowie die Group of Picture-Parameter handelt. Diese Daten spielen aber bei der Erfindung der Anmelderin nur eine untergeordnete Rolle und können daher bei der weitern Beschreibung außer Acht bleiben. Eine Group of Pictures beinhaltet Informationen über die Codierreihenfolge der Bildtypen. Das erste codierte Bild einer Group of Pictures ist immer ein I-Frame, wobei die Codierreihenfolge beispielsweise wie folgt aussieht:
I-Frame, B-Frame, B-Frame, P-Frame, B-Frame, B-Frame, P-Frame, B-Frame, B-Frame, P-Frame, B-Frame, B-Frame, P-Frame.

Diese Bildfolge stellt eine Group of Pictures dar.

Um einen Datenstrom zu decodieren, kommt ein Decoder zum Einsatz. Dieser ist im erfindungsgemäßen Empfänger bzw. der Darstellungsvorrichtung als eigenständige Einheit enthalten. In vorteilhafter Weise der Erfindung weist der erfindungsgemäße Empfänger, z. B. die Darstellungsvorrichtung, einen Hardwaredecoder auf, welcher von der Steuereinheit des Empfängers bzw. der Darstellungsvorrichtung der zur Decodierung verwendeten Programminhalte-Datenstream übergeben wird. Der Hardwaredecoder triggert auf den ersten I-Frame im Datenstrom, welcher ihm übergeben wird, und beginnt ab diesem mit der Decodierung des Datenstroms.

Der Datenstrom wird, wie bereits aufgezeigt, durch einen Demultiplexer aus dem Transportdatenstrom gewonnen. Hierzu ist vorzugsweise ein Demultiplexer vorgesehen, welcher aus dem Transportdatenstrom die in diesem verschachtelt angeordneten Rundfunkprogramme gewinnt. Der Demultiplexer demultiplext den Transportdatenstrom und legt die degemultiplexten Rundfunkprogramme, respektive deren Daten, die Datenströme der Rundfunkprogramme des Transportdatenstroms, in einen Zwischenspeicher ab. Aus diesem Zwischenspeicher entnimmt dann der Hardwaredecoder die Daten eines Rundfunkprogramms, wobei er nach dem Startpunkt des ersten I-Frames sucht. Der Beginn des ersten I-Frames ist stets der Beginn der Group of Pictures, d. h., die I-Frames und die zugeordneten P-Frames und B-Frames können dann vom Hardwaredecoder decodiert werden. Das Ergebnis der Decodierung übergibt der Hardwaredecoder dann direkt der Videoengine, welche die codierten Bilder als Bewegtbilder auf der Anzeigevorrichtung darstellt.

Erfolgt nunmehr ein Wechsel zwischen einem aktuell dargestellten Rundfunkprogramm auf ein anderes, so ist wie folgt zu unterscheiden:

Wird innerhalb eines Transportdatenstromes ein Wechsel eines Rundfunkprogramms vorgenommen, d.h. sind beide Rundfunkprogramme im selben Transportdatenstrom vorhanden, so muss die zugehörige Steuereinheit im Empfänger, vorzugsweise eine Mikrocomputereinheit, den Hardwaredecoder anweisen, den Datenstrom des neu ausgewählten Rundfunkprogramms zu decodieren. Hierzu teilt diese dem Demultiplexer mit, welcher Datenstrom in den Zwischenspeicher, aus welchem der Hardwaredecoder die Daten entnimmt, geschrieben werden soll. In vorteilhafter Weise schreibt der Demultiplexer jeden der durch die Demultiplexierung gewonnen Datenstrom eines jeden Rundfunkprogramms ab einer vordefinierten Speicheradresse in den Zwischenspeicher. Es besteht nunmehr die Möglichkeit, den Auslesevorgang aus dem Zwischenspeicher durch den Decoder durch Übergabe der Startadresse im Zwischenspeicher des zu decodierenden Datenstroms zu übergeben, oder aber den Datenstrom, der decodiert werden soll, an eine vordefinierte Speicheradresse einzuschreiben. Dieser Adresswechsel sowie das Abwarten, bis der Hardwaredecoder den nächsten Startpunkt der Group of Pictures findet, benötigt einige Zeit. In dieser Zeit kann kein Bild des neu ausgewählten Rundfunkprogramms dargestellt werden, es erfolgt dann zumeist eine Schwarztastung der Anzeigevorrichtung.

Erfindungsgemäß werden nunmehr vom Demultiplexer auch die weiteren Rundfunkprogramme, welche im Transportdatenstrom vorhanden sind, in den Zwischenspeicher oder in einen anderen zusätzlichen Speicher gespeichert. Bei diesem Zwischenspeicher handelt es sich um einen first-in-last-out-Speicher oder einen Pufferspeicher mit einer begrenzten Größe. Die Daten werden kontinuierlich von neueren Daten überschrieben. Aus diesem Speicher entnimmt nunmehr die Mikrocomputereinheit weitere Daten in der Weise, dass sie die dort gespeicherten Daten nach I-Frames durchsucht. Wird ein I-Frame gefunden, so wird dieser in einen weiteren Zwischenspeicher geschrieben. Zusätzlich zu den Daten dieses I-Frames wird das Rundfunkprogramm, welches zugehörig ist, als Code hinterlegt. Es liegen somit in diesem Zwischenspeicher die aktuell empfangenen I-Frames der weiteren Rundfunkprogramme im Transportdatenstrom vor. Wird nunmehr eine Initiierung eines Programmwechsels vorgenommen, so wird von der Mikrocomputereinheit der letzte I-Frame, der dem Rundfunkprogramm entspricht, auf welches gewechselt wird, aus dem Zwischenspeicher entnommen und der Videoengine zur Darstellung übergeben.

In einer vorteilhaften Ausgestaltung der Erfindung werden die I-Frames vor dem Speichern in den Zwischenspeicher decodiert und erst dann abgespeichert. In einer anderen vorteilhaften Ausgestaltung der Erfindung werden die I-Frames codiert gespeichert und vor der Übergabe an die Videoengine decodiert.

Die Videoengine stellt dann das an sie übergebene Bild dar. Eine Schwarztastung muss daher nicht mehr erfolgen, da bereits ein Bild des neu ausgewählten Rundfunkprogramms dargestellt werden kann. In der Zwischenzeit, während dieses Bild dargestellt wird, wird in beschriebener Weise die Aufbereitung des neu ausgewählten Rundfunkprogramms vorgenommen. Somit wird dem Nutzer angezeigt, auf welches Programm er umgeschaltet hat in der Weise, dass unmittelbar nach der Programmanwahl eines anderen Rundfunkprogramms ein diesen repräsentierendes Bild dargestellt wird.

Wird hingegen zwischen zwei Rundfunkprogrammen umgeschaltet, welche nicht im selben Transportdatenstrom übertragen werden, so bringt das erfindungsgemäße Verfahren keinen Vorzug. Um dieses Problem zu lösen, sind in einer weiteren vorteilhaften Ausgestaltung der Erfindung zwei Empfangsmodule bzw. Empfänger vorhanden.
Somit ist es möglich, parallel zwei Transportdatenströme eines Rundfunksignals zu empfangen und zu analysieren. Es sind zwei Demultiplexer vorhanden, wobei jeder Demultiplexer eine der empfangenen Transportdatenströme demultiplext. Unterschieden wird hiermit in einen ersten Empfänger und einen zweiten Empfänger, wobei der erste Empfänger prioritätsmäßig vorgeschaltet ist. Der erste Empfänger und der zugeordnete Demultiplexer sind mit dem Hardwaredecoder verbunden. Dies hat zur Folge, dass die kontinuierlichen Darstellungen eines Rundfunkprogramms stets über den ersten Empfänger und dem diesem zugeordneten Demultiplexer erfolgt. Die weiteren Rundfunkprogramme, welche im Transportdatenstrom enthalten sind, werden, wie bereits vorgenannt beschrieben, von der Mikrocomputereinheit analysiert. Erfolgt nunmehr eine Umschaltung von Rundfunkprogrammen, welche in unterschiedlichen Transportdatenströmen enthalten sind, so kommt der Einsatz des zweiten Empfängers zu tragen. Dieser zweite Empfänger schaltet kontinuierlich auf sämtliche empfangbaren, im Rundfunksignal vorhandenen Transportdatenströme um und leitet diese einem Demultiplexer zu, welcher hieraus die degemultiplexten Rundfunkprogramme demultiplext. Diese werden in einem Zwischenspeicher gespeichert, die Mikrocomputereinheit durchsucht diesen Zwischenspeicher und speichert jeweils die I-Frames der Datenströme des Rundfunkprogramms mit der jeweiligen Rundfunkprogrammkennung ab. Es ist somit möglich, dass, im Zwischenspeicher jeweils I-Frames aller empfangbaren Rundfunkprogramme vorhanden sind. Erfolgt nunmehr eine Umschaltung von einem Rundfunkprogramm auf ein anderes innerhalb des gesamten Rundfunksignals, so sucht die Mikrocomputereinheit bei der Umschaltung aus dem Zwischenspeicher einen zugehörigen gespeicherten I-Frame heraus und übergibt dieses der Videoengine zur Darstellung. Zeitgleich wird der erste Empfänger in den entsprechenden Transportdatenstrom umgeschaltet und das neu angewählte Programm in beschriebener Weise über den Hardwaredecoder der Videoengine übergeben dargestellt.

Auch hier erfolgt somit eine beschleunigte visuelle Umschaltung ohne eine Schwarztastung.

Sind nunmehr eine sehr große Anzahl von Rundfunkprogrammen vorhanden und durchsucht der zweite Empfänger sämtliche Rundfunkprogramme und Transportdatenströme im Rundfunksignal, so kann es vorkommen, dass im Speicher zu einzelnen Rundfunkprogrammen ein I-Frame gespeichert ist, welches mehrere Sekunden "alt" ist. Daher ist im nachfolgenden eine weitere vorteilhafte Ausgestaltung der Erfindung beschrieben, die diesem Umstand Rechnung trägt.

Sind zwei Empfänger vorhanden, wird wie folgt vorgegangen:

Mittels der zwei Empfänger ist es möglich, parallel einen zweiten Transportdatenstrom eines Rundfunksignals zu empfangen und zu analysieren. Es sind zwei Demultiplexer vorhanden, wobei jeder Demultiplexer einen der empfangenen Transportdatenströme demultiplext. Unterschieden wird hiermit in einen ersten Empfänger und einen zweiten Empfänger, wobei der erste Empfänger prioritätsmäßig vorgeschaltet ist. Der erste Empfänger und der zugeordnete Demultiplexer sind mit dem Hardwaredecoder verbunden. Dies hat zur Folge, dass die kontinuierlichen Darstellungen eines Rundfunkprogramms stets über den ersten Empfänger und dem diesem zugeordneten Demultiplexer erfolgen.

Die Rundfunkprogramme und deren Empfangsdaten, wie Sendefrequenz des Transportdatenstroms, sind in einem Programmplatzspeicher abgespeichert. Dort sind die Rundfunkprogramme in einer vorgegebenen Reihenfolge abgespeichert in der Weise, dass jedem Rundfunkprogramm ein Programmplatz in Form einer Nummer zugewiesen ist. Die Mikrocomputereinheit kann somit feststellen, welches Rundfunkprogramm einem aktuell über die Videoengine dargestellten Rundfunkprogramm folgt oder diesem vorausgehend im Programmplatzspeicher liegt. Der Programmspeicher ist fortlaufend belegt und jedem der dort gespeicherten Rundfunkprogramme ist ein Programmplatz in Form einer Zahl, zumeist beginnend mit 1 zugewiesen.

Weiterhin sind die meisten Rundfunkempfänger mit einer Funktion ausgestattet, dass durch Betätigung einer Taste auf der zugehörigen Bedieneinheit des Rundfunkempfängers ein Umschalten der Darstellung von einem Rundfunkprogramm auf ein im Programmspeicher auf dem nachfolgenden Programmplatz gespeicherten Rundfunkprogramm erfolgt. Nunmehr kommt der zweite Empfänger zum Einsatz. Der zweite Empfänger schaltet kontinuierlich auf mindestens das nachfolgende und das vorausgehende Rundfunkprogramm um, welches im Programmspeicher dem aktuell über die Videoengine dargestellte Rundfunkprogramm vorausgehend oder nachfolgend abgespeichert ist, leitet diese einem Demultiplexer zu, welcher hieraus die degemultiplexten Rundfunkprogramme demultiplext. Diese werden in einem Zwischenspeicher gespeichert, die Mikrocomputereinheit durchsucht diesen Zwischenspeicher und speichert jeweils die I-Frames der Datenströme des Rundfunkprogramms mit der jeweiligen Rundfunkprogrammkennung ab. Es ist somit möglich, dass im Zwischenspeicher jeweils I-Frames einer definierten Anzahl von Rundfunkprogrammen abgespeichert sind, die im Programmspeicher dem aktuell vom ersten Empfänger empfangenen Rundfunkprogramm vorausgehende und/oder nachfolgen. Erfolgt nunmehr eine Umschaltung von einem Rundfunkprogramm auf ein im Programmspeicher diesem nachfolgenden oder vorausgehenden Programmspeicherplatz, so sucht die Mikrocomputereinheit bei der Umschaltung aus dem Zwischenspeicher einen zugehörigen gespeicherten I-Frame heraus und übergibt dieses der Videoengine zur Darstellung. Zeitgleich wird der erste Empfänger in den entsprechenden Transportdatenstrom umgeschaltet und das neu angewählte Programm in beschriebener Weise über den Hardwaredecoder der Videoengine übergeben dargestellt. Somit sind im Zwischenspeicher relativ aktuelle I-Frames zu den Rundfunkprogrammen, auf welche in der beschriebenen Weise umgeschaltet wird, vorhanden.

Es hat sich als vorteilhaft erwiesen, die Anzahl der Rundfunkprogramme, welche auf diese Weise gesucht und deren I-Frames gespeichert werden, auf ein bis fünf Rundfunkprogramme zu beschränken, welche dem Programmplatz des aktuell dargestellten Rundfunkprogramms im Programmspeicher folgen und/oder vorausgehen.

Im Weiteren wird nunmehr die Erfindung anhand eines konkreten Ausführungsbeispiels anhand von Figuren dargestellt.

Es zeigen:
- FIG 1: einen Ausschnitt aus einem Transportdatenstrom eines digital übertragenen Rundfunksignals,
- FIG 2: einen Ausschnitt aus einem Rundfunksignal, welches aus drei Transportdatenströmen besteht,
- FIG 3: einen schematischen Aufbau eines MPEG-Datensignals,
- FIG 4: einen schematischen Aufbau einer erfindungsgemäßen Rundfunkempfangseinrichtung,
- FIG 5: einen weiteren schematischen Aufbau einer erfindungsgemäßen Empfangsvorrichtung,
- FIG 6: eine schematische Belegung eines Speichers der Rundfunkempfangseinrichtung.

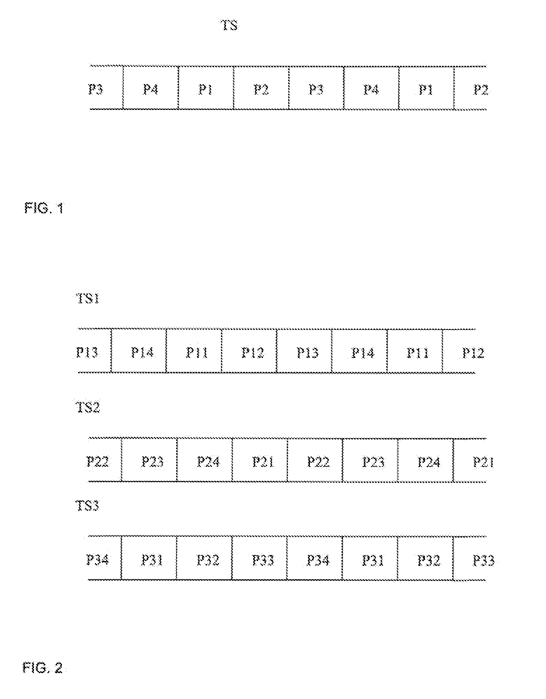

In FIG. 1 ist ein Ausschnitt aus einem digital übertragenen Rundfunksignal dargestellt. Es ist der Transportdatenstrom TS dargestellt, der beispielhaft vier Rundfunkprogramme enthält, z. B. die Programme P1, P2, P3, P4. Diese Programme P1, P2, P3, P4, auch als Programmdatenstrom bezeichnet, werden quasi parallel übertragen, diese Daten liegen verschachtelt und demultiplext im Transportdatenstrom TS vor. Zur besseren Verdeutlichung ist dies in FIG. 1 symbolisch dargestellt. Im Transportdatenstrom TS liegen die Rundfunkprogramme P1, P2, P3, P4 in gemultiplexter Form als Datenströme vor.

In FIG. 2 ist ein Rundfunksignal dargestellt, welches beispielhaft aus drei Transportdatenströmen TS1, TS2, TS3 besteht. In jedem der Transportdatenströme TS1, TS2, TS3 sind jeweils vier Rundfunkprogramme, nämlich P11, P12, P13, P14 und P21, P22, P23, P24 und P31, P32, P33, P34 vorhanden.

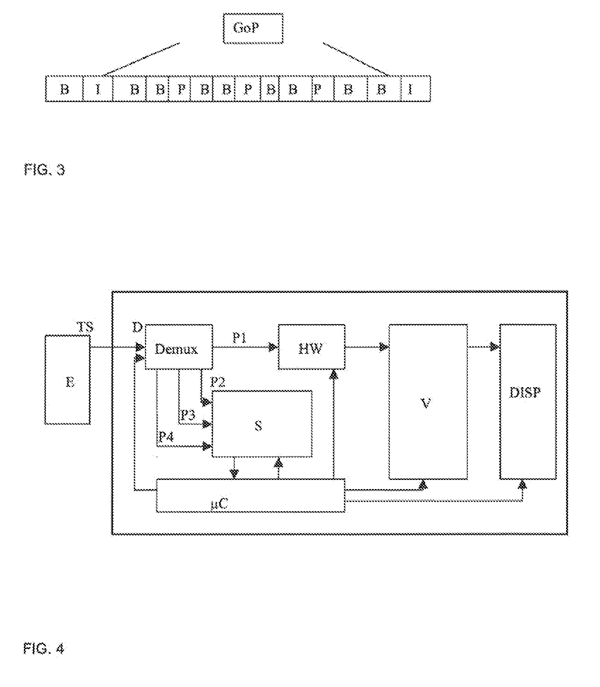

In FIG. 3 ist beispielhaft der Aufbau eines MPEG-Videodatenstroms mit in verschiedenen Frames dargestellt. Das Wesentliche bei der Übertragung von digitalen Rundfunksignalen nach dem DVB-Standard ist die Datenreduktion der zu übertragenden Bilder. Die Encodierung der Bilddaten und die Datenkompression erfolgen in drei Stufen und berücksichtigen dabei, dass die aufeinander folgenden Phasen der Bildfolge einer Bewegtdarstellung ähnliche Inhalte haben. Es werden daher ausgehend von einem ersten Bild, dem I-Frame I, in den folgenden Bildern nur die Änderungen bzw. Veränderungen übertragen, die P-Frames P und die B-Frames B. Am wenigsten komprimiert sind die sogenannten B-Frames B. Hier erfolgt eine verlustbehaftete Datenkompression innerhalb des Filmbildes. Die I-Frames I ähneln JPEG-komprimierten Bildern. Anschließend, in der nächsten Stufe, werden nur Veränderungen gegenüber dem letzten I-Frame gespeichert, die es ermöglichen, eines der folgenden Bilder vorherzusagen. Dies ist dann ein P-Frame P. Die letzte und höchste Stufe der Kompression sind die B-Frames B. Diese B-Frames weisen die höchste Datenkompression auf. Damit werden die Lücken zwischen den I-Frames I und den P-Frames P oder zwischen den zwei P-Frames P aufgefüllt. Um ein B-Frame B zur Darstellung zu rekonstruieren, benötigt man neben übertragenen Differenzinformationen auch den letzten P-Frame P oder I-Frame I sowie den ersten folgenden P-Frame P oder I-Frame I.

Die sich ständig wiederholende Abfolge der Frames I B B P B B P B B P B B bezeichnet man als Group of Pictures GoP. Diese Reihenfolge wird aus jedem der Datenstreams P11, P12, P13, P14, P21, P22, P23, P24, P31, P32, P33, P34 der zugehörigen Transportdatenströme TS1, TS2, TS3 aus dem Rundfunksignal gewonnen.

In FIG. 4 ist der schematische Aufbau einer erfindungsgemäßen Vorrichtung offenbart. Diese besteht aus einem Empfänger E, einem Demultiplexer Demux, einem Hardwaredecoder HW, einem Speicher S, einem Mikrocomputer µC, einer Videoengine V und einer Anzeigevorrichtung DISP. Der Empfänger E löst aus dem Rundfunksignal einen Transportdatenstrom TS heraus. Ein Nutzer wählt somit aus allen im empfangenen Rundfunksignal enthaltenen Transportdatenströmen einen aus, in welchem das gewünschte Rundfunkprogramm enthalten ist. Es wird dann dieser Transportdatenstrom TS vom Empfänger E gewonnen und an den Demultiplexer Demux geleitet. Der Demultiplexer demultiplext das Eingangssignal des Transportdatenstroms TS und gewinnt hieraus die einzelnen Rundfunkprogramme P1, P2, P3, P4, welche dann noch in digital codierter Form vorliegen. Ein Ausgang des Demultiplexers Demux, der das darzustellende Rundfunkprogramm P1 repräsentiert, wird direkt einem Hardwaredecoder HW zugeleitet. Der Hardwaredecoder HW decodiert die Daten des Rundfunkprogramms P1, welche als Datenstrom vorliegen, und übergibt diese Daten an die Videoengine V. Die Videoengine V bereitet die Daten entgültig auf und stellt diese auf einer Anzeigevorrichtung DISP dar. Die weiteren Rundfunkprogramme P2, P3, P4, welche im Transportdatenstrom TS vorhanden sind, leitet der Demultiplexer Demux in einen Speicher S. Die Mikrocomputereinheit µC durchsucht nun diesen Speicher S kontinuierlich nach dort abgelegten I-Frames und speichert diese I-Frames unter Speicherung einer Kennung, welche das jeweilige Rundfunkprogramm kennzeichnet, aus dem der I-Frame stammt, im Speicher S ab. Diese Speicherung kann auch in einem separaten Speicher erfolgen. Der Speicher S ist endlich in seiner Größe, so dass die Daten, welche aus dem Demultiplexer in den Speicher S geleitet werden, kontinuierlich überschrieben werden müssen. Dies wird von der Mikrocomputereinheit µC vorgenommen.

In einer weiteren Realisierungsform der Erfindung werden die Datenströme der Rundfunkprogramme P2, P3, P4 von der Mikrocomputereinheit µC nach I-Frames durchsucht. Die Mikrocomputereinheit µC speichert dann diese gefundenen I-Frames im Speicher S mit einer Kennung zum jeweiligen Rundfunkprogramm P2, P3, P4 ab, von welchem der I-Frame stammt.

Die Zwischenspeicherung der I-Frames durch die Mikrocomputereinheit µC im Speicher S erfolgt kontinuierlich überschreibend, wie vorher beschrieben, so dass in dem jeweiligen Zwischenspeicher, welcher auch im Speicher S als Speicherbereich ausgestaltet sein kann, stets die aktuellen I-Frames der Rundfunkprogramme P2, P3, P4 vorliegen.

Wird nunmehr innerhalb des Transportdatenstroms TS ein Rundfunkprogramm gewechselt, d. h., ein Wechsel der Darstellung von einem Rundfunkprogramm auf ein anderes Rundfunkprogramm vorgenommen, so wird dies von einem Nutzer initiiert. Die Mikrocomputereinheit µC weist danach den Demultiplexer Demux an, das nunmehr ausgewählte Rundfunkprogramm direkt an den Hardwaredecoder HW zu leiten. Der Hardwaredecoder HW decodiert das Rundfunkprogramm und leitet den decodierten Datenstrom, der das neu gewählte Rundfunkprogramm repräsentiert, der Videoengine V zu, welche diese Daten entsprechend weiter verarbeitet und die Darstellung auf der Anzeigevorrichtung DISP vornimmt.

Während dieses Prozesses sucht die Mikrocomputereinheit µC aus dem Speicher S den dort gespeicherten I-Frame desjenigen Rundfunkprogramms, welcher dem neu angewählten Rundfunkprogramm zugehörig ist, und übergibt diesen I-Frame der Videoengine V zur Darstellung auf der Anzeigevorrichtung DISP. Somit erfolgt, sobald ein Wechsel eines Rundfunkprogramms initialisiert ist, eine Darstellung des im Speicher S gespeicherten und dem neu angewählten Rundfunkprogramm zugehörigen I-Frames. Es kann somit sofort ein Bild zum neu angewählten Rundfunkprogramm dargestellt werden, wodurch eine Schwarztastung unterbleiben kann und zugleich ein Nutzer sofort erkennt, dass eine Umschaltung erfolgt.

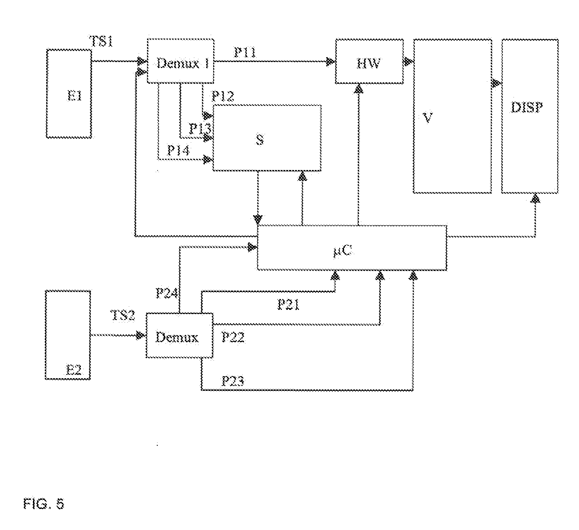

In FIG. 5 ist die Ausgestaltung der Erfindung mittels zwei Empfänger E1 und E2 dargestellt. Weiterhin ist jeweils jedem Empfänger ein Demultiplexer Demux1 und Demux2 zugeordnet. Der Empfänger E1 wählt aus dem Rundfunksignal einen Transportdatenstrom aus, in FIG. 5 den Transportdatenstrom TS1.

Ein Nutzer hat vorher ausgewählt, dass ein Rundfunkprogramm, welches in diesem konkreten Fall mit P11 bezeichnet ist und als Datenstrom im Transportdatenstrom TS1 enthalten ist, auf der Anzeigevorrichtung DISP angezeigt werden soll. Der Empfänger E1 empfängt aus dem Rundfunksignal den Transportdatenstrom TS1 und leitet diesen an den Demultiplexer Demux1. Dieser dematriziert den Transportdatenstrom TS1. Der Transportdatenstrom TS1 enthält die Rundfunkprogramme P11, P12, P13, P14. Diese werden durch die Dematrizierung im Demultiplexer Demux1 aus dem Transportdatenstrom TS1 gewonnen. Das Rundfunkprogramm, welches den Datenstrom P11 repräsentiert, wird direkt dem Hardwaredecoder HW zugeleitet. Dieser decodiert den Datenstrom des Rundfunkprogramms P11 und übergibt die decodierten Daten an die Videoengine V, welche den Inhalt des Rundfunkprogramms P11 auf der Anzeigevorrichtung DISP darstellt.

Der Demultiplexer Demux1 gibt die weiteren Datenströme, welche die Rundfunkprogramme P12, P13 und P14 repräsentieren, in einen Speicher S. Diesen Speicher S durchsucht die Mikrocomputereinheit µC nach I-Frames und speichert jeweils die I-Frames mit zugehöriger Kennung für das Rundfunkprogramm im Speicher ab. Die weiteren Daten werden gelöscht. Dies erfolgt kontinuierlich, so dass stets die aktuellen I-Frames im Speicher S gespeichert sind, mit dem Verweis auf das zugehörige Rundfunkprogramm, im vorliegenden Fall P12, P13, P14.

In einer weiteren Ausgestaltung der Erfindung durchsucht die Mikrocomputereinheit µC die Datenströme der Rundfunkprogramme P12, P13, P14 nach deren Dematrizierung nach I-Frames und speichert diese in den Speicher S, mit einer zugehörigen Kennung für das jeweilige Rundfunkprogramm P12, P13, P14.

Weiterhin ist nunmehr der Empfänger E2 vorhanden. Dem Empfänger E2 ist der Demultiplexer Demux2 zugeordnet. Der Empfänger E2 löst aus dem Rundfunksignal beispielhaft den Transportstrom TS2 aus. Der Empfänger E2 ist aber nunmehr über die Mikrocomputereinheit µC derartig gesteuert, dass er sämtliche im Rundfunksignal empfangene Transportdatenströme, außer demjenigen Transportdatenstrom, der vom Empfänger E1 aktuell empfangen wird, auswertet. Somit stimmt sich der Empfänger E2 nacheinander auf sämtliche weiteren Transportdatenströme im Rundfunksignal ab und leitet diese Transportdatenströme kontinuierlich nacheinander in einem vorgegebenen Zeitrhythmus an den Demultiplexer Demux2. Dieser löst aus dem nunmehr empfangenen Transportdatenstrom TS2 des Empfängers E2 die enthaltenen Rundfunkprogramme, in diesem Fall P21, P22, P23, P24, aus. Die Daten der Rundfunkprogramme P21, P22, P23, P24 werden der Mikrocomputereinheit µC zugeführt. Es ist nunmehr vorgesehen, dass die Mikrocomputereinheit µC diese Datenströme nach I-Frames durchsucht und die gefundenen I-Frames mit einer Verweisung auf das Rundfunkprogramm P21, P22, P23, P24 im Speicher S speichert. Wenn der Transportdatenstrom TS2 durchsucht ist und wenn zu jedem Rundfunkprogramm P21, P22, P23, P24 im Transportdatenstrom TS2 ein I-Frame im Speicher S gespeichert ist, weist die Mikrocomputereinheit µC den Empfänger E2 an, einen weiteren Transportdatenstrom zu empfangen und dort die vorgeschriebene Vorgehensweise vorzunehmen. Nach einer vorgegebenen Zeit hat der Empfänger E2 sämtliche weiteren Transportdatenströme, welche im Rundfunksignal vorhanden sind, in der beschriebenen Weise durchsucht. Im Speicher S ist dann zu jedem empfangbaren Rundfunkprogramm ein I-Frame abgespeichert.

Wird nun ein Rundfunkprogrammwechsel, d.h. die Umschaltung von einem Rundfunkprogramm auf ein anderes Rundfunkprogramm vorgenommen, so weist die Mikrocomputereinheit µC den Empfänger E1 an, auf das entsprechende Rundfunkprogramm zu synchronisieren, d.h. denjenigen Transportdatenstrom aus dem Rundfunksignal zu empfangen, in welchem das neu angewählte Rundfunkprogramm enthalten ist. Während dieser Zeit durchsucht die Mikrocomputereinheit µC den Speicher S und entnimmt das dort zu diesem ausgewählten Rundfunkprogramm gespeicherte Bild in Form eines I-Frames. Diese übergibt die Mikrocomputereinheit µC der Videoengine V, welche dann dieses auf der Anzeigevorrichtung DISP darstellt.

In einer weiteren vorteilhaften Ausgestaltung der Erfindung wird erfindungsgemäß das Problem gelöst, dass im Falle einer sehr großen Anzahl von Rundfunkprogrammen, welche im Rundfunksignal enthalten sind, beim Durchsuchen des zweiten Empfängers E2 nach allen Rundfunkprogrammen (P11 bis P34) und allen Transportdatenströmen (TS1 bis TS3) es vorkommen kann, dass im Speicher S zu einzelnen Rundfunkprogrammen (P11 bis P34) ein I-Frame gespeichert ist, welches mehrere Sekunden "alt" ist. Daher ist im nachfolgenden eine weitere vorteilhafte Ausgestaltung der Erfindung beschrieben, die diesem Rechnung trägt.

Es ist der zweite Empfänger E2 vorhanden. Dem Empfänger E2 ist der Demultiplexer Demux2 zugeordnet. Der Empfänger E2 löst aus dem Rundfunksignal beispielhaft den Transportstrom TS2 aus.
Die Rundfunkprogramme (P11 bis P34) und deren Empfangsdaten, wie Sendefrequenz des Transportdatenstroms, sind in einem Programmplatzspeicher abgespeichert. Dort sind die Rundfunkprogramme in einer vorgegebenen Reihenfolge abgespeichert in der Weise, dass jedem Rundfunkprogramm (P11 bis P34) ein Programmplatz in Form einer Nummer zugewiesen ist. Die Mikrocomputereinheit µC kann somit feststellen, welches Rundfunkprogramm einem aktuell über die Videoengine V dargestellten Rundfunkprogramm im Programmplatzspeicher folgt.

Der Programmspeicher ist fortlaufend belegt und jedem der dort gespeicherten Rundfunkprogramme (P11 bis P34) ist ein Programmplatz in Form einer Zahl, zumeist beginnend mit 1, zugewiesen. Weiterhin sind die meisten Rundfunkempfänger mit einer Funktion ausgestattet, dass durch Betätigung einer Taste auf der zugehörigen Bedieneinheit des Rundfunkempfängers ein Umschalten der Darstellung von einem Rundfunkprogramm auf ein im Programmspeicher auf dem nachfolgenden Programmplatz gespeicherten Rundfunkprogramm erfolgt.

Nunmehr kommt der zweite Empfänger zum Einsatz. Der Empfänger E2 ist aber über die Mikrocomputereinheit µC derart gesteuert, dass eine vordefinierbare Anzahl von Rundfunkprogrammen nacheinander umschaltet, welche dem aktuell dargestellten Rundfunkprogramm im Programmplatzspeicher folgen oder vorausgehen.

Somit weist die Mikrocompuereinheit µC den Empfänger E2 an, sich auf diese Rundfunkprogramme, bzw. die Transportdatenströme abzustimmen. Der Empfänger E2 stimmt sich nacheinander auf diese Rundfunkprogramme ab, welche im Programmplatzspeicher dem aktuell dargestellten Rundfunkprogramm folgen und/oder vorausgehen, und leitet diese Transportdatenströme kontinuierlich nacheinander an den Demultiplexer Demux2. Dieser löst aus dem nunmehr empfangenen Transportdatenstrom TS2 des Empfängers E2 die enthaltenen Rundfunkprogramme aus und speichert nur die I-Frames der Rundfunkprogramme, die dem aktuell dargestellten Rundfunkprogramm entsprechen.

Ansonsten arbeitet die Erfindung wie bereits oben beschrieben, eben mit der Unterschied, dass nur für eine definierte Anzahl von Rundfunkprogrammen, welche dem aktuell dargestellten Rundfunkprogramm im Programmplatzspeicher vorausgehen oder nachfolgen, ein jeweils zugehöriger I-Frame im Speicher S gespeichert wird.

Wird nun ein Rundfunkprogrammwechsel, d.h. die Umschaltung von einem Rundfunkprogramm auf ein anderes Rundfunkprogramm vorgenommen, so weist die Mikrocomputereinheit µC den Empfänger E1 an, auf das entsprechende Rundfunkprogramm zu synchronisieren, d.h. denjenigen Transportdatenstrom aus dem Rundfunksignal zu empfangen, in welchem das neu angewählte Rundfunkprogramm enthalten ist. Während dieser Zeit durchsucht die Mikrocomputereinheit µC den Speicher S und entnimmt das dort zu diesem ausgewählten Rundfunkprogramm gespeicherte Bild in Form eines I-Frames, wenn ein solches gespeichert ist. Ist dies der Fall, übergibt die Mikrocomputereinheit µC der Videoengine V, welche dann dieses auf der Anzeigevorrichtung DISP darstellt.

In einer weiteren vorteilhaften Ausgestaltung der Erfindung überprüft die Mikrocomputereinheit µC, ob das dem aktuell dargestellten Rundfunkprogramm im Programmplatzspeicher folgende und/oder vorausgehende Rundfunkprogramm im selben Transportdatenstrom liegt, wie das aktuell dargestellten Rundfunkprogramm. In diesem Fall ist der Einsatz des zweiten Empfängers E2 nicht notwendig. Dieser kann zunächst funktionslos bleiben. Die Mikrocomputereinheit µC arbeitet wie eingangs zu FIG. 1 beschrieben. Auf diese Weise kann auch ohne den zweiten Empfänger E2 die Aufgabe gelöst werden. Im Falle dass das dem aktuell dargestellten Rundfunkprogramm im Programmplatzspeicher folgende und/oder vorausgehende Rundfunkprogramm im selben Transportdatenstrom liegt wie das aktuell dargestellte Rundfunkprogramm kann die Mikrocomputereinheit µC quasi gleichzeitig die I-Frames des dem aktuell dargestellten Rundfunkprogramm im Programmplatzspeicher folgende und/oder vorausgehende Rundfunkprogramm mit dem Empfänger E2 scannen. Gleiches gilt, wenn das dem aktuell dargestellten Rundfunkprogramm im Programmplatzspeicher folgende und/oder vorausgehende Rundfunkprogramm im gleichen Transportdatenstrom liegen.

In einer weiteren vorteilhaften Ausgestaltung der Erfindung wird entweder der I-Frame in seiner Form, wie er vorliegt, nämlich codiert im Speicher S gespeichert, und beim Auslesen und der Wiedergabe an die Videoengine V decodiert die Mikrocomputereinheit µC den I-Frame, so dass dieser von der Videoengine V dargestellt werden kann. In einer anderen Ausgestaltung der Erfindung wird die Decodierung bereits bei der Speicherung des I-Frames im Speicher S vorgenommen, so dass es ermöglicht wird, dass die Videoengine V direkt auf die entsprechende Adresse im Speicher S zugreifen kann. Dies ermöglicht einen schnelleren Zugriff und eine schnellere Darstellung.

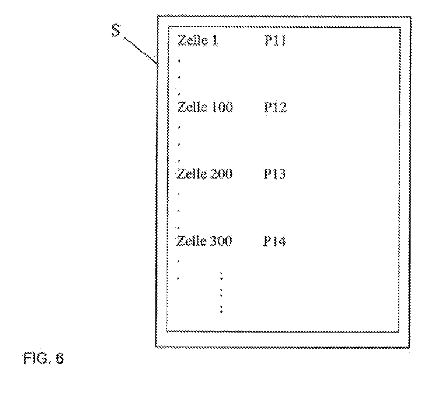

In FIG. 6 ist symbolisch die Speicherbelegung des Speichers S dargestellt. Da es sich bei den Datenmengen der I-Frames, welche den Rundfunkprogrammen P12, P13, P14, P21, P22, P23, P24, P31, P32, P33 und P34 zugehören, um bekannte Datenmengen handelt, ist der Beginn (Startadresse) der Daten eines jeden I-Frames eines jeden zugehörigen Rundfunkprogramms P12, P13, P14, P21, P22, P23, P24, P31, P32, P33 und P34 bekannt. Die Mikrocomputereinheit µC speichert die jeweiligen I-Frames beginnend mit einer vordefinierten Speicherstelle im Speicher S. Es liegen zu einem gewissen Zeitpunkt im Speicher S an den entsprechenden Speicheradressen die I-Frames der Rundfunkprogramme P12, P13, P14, P21, P22, P23, P24, P31, P32, P33 und P34.

Bei einer Programmumschaltung, wie eingangs beschrieben, übergibt die Mikrocomputereinheit µC der Videoengine V nunmehr nur noch die Speicheradresse des Speicher S, ab welcher diese den I-Frame entnehmen muss. Die I-Frames sind entweder in codierter oder in decodierter Form gespeichert.

In einer weiteren Ausgestaltung der Erfindung werden die I-Frames zunächst decodiert in den Speicher geschrieben. Die Mikrocomputereinheit µC springt in einem weiteren Schritt dann die Speicheradressen an und decodiert mit einem Unterprogramm, das auf der Mikrocomputereinheit µC implementiert ist, diese I-Frames und speichert die decodierten Daten in dieselben Speicherzellen. Diese Daten werden dann im Bedarfsfall ausgelesen der Videoengine V zugeführt.

## Patentansprüche

1. Verfahren zum Betrieb eines Rundfunkempfängers zum Empfang eines Rundfunksignals, welcher von einem Sender in digital codierter Form übertragen wird, wobei das Rundfunksignal mindestens einen Transportdatenstrom und jeder Transportdatenstrom mindestens ein Rundfunkprogramm enthält, wobei der Rundfunkempfänger eine Empfangseinheit enthält, mit folgenden Verfahrensschritten:
- Empfang des Rundfunksignals,
- Auswahl eines Transportdatenstroms aus dem Rundfunksignal,
- Demultiplexen des ausgewählten Transportdatenstromes, sodass alle im ausgewählten Transportdatenstrom enthaltenen Rundfunkprogramme in degemultiplexter Form vorliegen,
- Auswahl eines Rundfunkprogramms aus dem Transportdatenstrom zur Darstellung auf einer Anzeigeeinheit,
- Zuführung des zur Darstellung ausgewählten Rundfunkprogramms an einen Decoder zur Decodierung der dem Rundfunkprogramm zugehörigen Daten,
- Übergabe der decodierten, dem Rundfunkprogramm zugehörigen Daten an die Darstellungseinheit,
- Durchsuchen der weiteren, nicht zur Darstellung ausgewählten degemultiplexten Rundfunkprogramme des ausgewählten Transportdatenstroms nach in diesen enthaltenen codierten Bildern,
- Decodierung dieser Bilder und Speicherung in einem Speicher mit Zuordnung einer Kennung für jedes Rundfunkprogramm des ausgewählten Transportdatenstroms zu den gespeicherten Bildern,
wobei bei jeder Initiierung eines Wechsels der Darstellung des aktuell auf der Darstellungseinheit dargestellten Rundfunkprogramms auf ein anderes Rundfunkprogramm des ausgewählten Transportdatenstromes das diesem Rundfunkprogramm zugeordnete und im Speicher gespeicherte Bild aus diesem ausgelesen und der Darstellungseinheit übergeben wird, wodurch bereits ein Bild des neu ausgewählten Rundfunkprogramms dargestellt wird, während der Rundfunkempfänger auf das neu ausgewählte Rundfunkprogramm umgeschaltet wird.

2. Verfahren zum Betrieb eines Rundfunkempfängers zum Empfang eines Rundfunksignals, welcher von einem Sender in digital codierter Form übertragen wird, wobei das Rundfunksignal mindestens einen Transportdatenstrom und jeder Transportdatenstrom mindestens ein Rundfunkprogramm enthält, wobei der Rundfunkempfänger zwei Empfangseinheiten enthält, mit folgenden Verfahrensschritten:
a. Empfang des Rundfunksignals,
b. Auswahl mindestens eines Transportdatenstroms aus dem Rundfunksignal und Zuweisung an die erste Empfangseinheit,
c. Demultiplexen des ausgewählten Transportdatenstromes, sodass alle im ausgewählten Transportdatenstrom enthaltenen Rundfunkprogramme in degemultiplexter Form vorliegen,
d. Auswahl eines Rundfunkprogramms aus dem Transportdatenstrom zur Darstellung auf einer Anzeigeeinheit,
e. Zuführung des zur Darstellung ausgewählten Rundfunkprogramms an einen Decoder zur Decodierung der dem Rundfunkprogramm zugehörigen Daten,
f. Übergabe der decodierten, dem Rundfunkprogramm zugehörigen Daten an die Darstellungseinheit,
g. Durchsuchen der weiteren, nicht zur Darstellung ausgewählten degemultiplexten Rundfunkprogramme des ausgewählten Transportdatenstroms nach in diesen enthaltenen codierten Bildern,
h. Decodierung dieser Bilder und Speicherung in einem Speicher mit Zuordnung einer Kennung für jedes Rundfunkprogramm zu den gespeicherten Bildern,
i. Zuweisen eines weiteren Transportdatenstroms an die zweite Empfangseinheit,
j. Demultiplexen dieses Transportdatenstromes und Durchsuchen der im Transportdatenstrom enthaltenen Rundfunkprogramme nach enthaltenen codierten Bildern;
k. Decodierung dieser Bilder und Speicherung im Speicher mit Zuordnung der Kennung für jedes Rundfunkprogramm zu den gespeicherten Bildern,
l. Kontinuierliche Fortsetzung der Schritte Lit i bis Lit k,
wobei bei jeder Initiierung eines Wechsels der Darstellung des aktuell auf der Darstellungseinheit dargestellten Rundfunkprogramms auf ein anderes Rundfunkprogramm das diesem Rundfunkprogramm zugeordnete und im Speicher gespeicherte Bild aus dem Speicher ausgelesen und der Darstellungseinheit übergeben wird, wodurch bereits ein Bild des neu ausgewählten Rundfunkprogramms dargestellt wird, während der Rundfunkempfänger auf das neu ausgewählte Rundfunkprogramm umgeschaltet wird.

3. Verfahren zum Betrieb eines Rundfunkempfängers zum Empfang eines Rundfunksignals, welcher von einem Sender in digital codierter Form übertragen wird, wobei das Rundfunksignal mindestens einen Transportdatenstrom und jeder Transportdatenstrom mindestens ein Rundfunkprogramm enthält, wobei der Rundfunkempfänger zwei Empfangseinheiten enthält und in einem Programmplatzspeicher die Rundfunkprogramme auf Programmplatznummern gespeichert sind, mit folgenden Verfahrensschritten:
- Empfang des Rundfunksignals,
- Auswahl mindestens eines Transportdatenstroms aus dem Rundfunksignal und Zuweisung an die erste Empfangseinheit,
- Demultiplexen des ausgewählten Transportdatenstromes, so dass alle im ausgewählten Transportdatenstrom enthaltenen Rundfunkprogramme in degemultiplexter Form vorliegen,
- Auswahl eines Rundfunkprogramms aus dem Transportdatenstrom zur Darstellung auf einer Anzeigeeinheit,
- Zuführung des zur Darstellung ausgewählten Rundfunkprogramms an einen Decoder zur Decodierung der dem Rundfunkprogramm zugehörigen Daten,
- Übergabe der decodierten, dem Rundfunkprogramm zugehörigen Daten an die Darstellungseinheit,
- Durchsuchen einer vorgegebener Anzahl von Rundfunkprogrammen, welche dem zur Darstellung ausgewählten degemultiplexten Rundfunkprogramm im Programmplatzspeicher vorausgehend und/oder nachfolgend abgespeichert sind, nach in diesen enthaltenen codierten Bildern,
- Decodierung dieser Bilder und Speicherung in einem Speicher mit Zuordnung einer Kennung für das jeweilige Rundfunkprogramm zu den gespeicherten Bildern,
wobei bei jeder Initiierung eines Wechsels der Darstellung des aktuell auf der Darstellungseinheit dargestellten Rundfunkprogramms auf ein anderes Rundfunkprogramm der Speicher nach einem zum Rundfunkprogramm gespeicherten Bild durchsucht wird und beim Vorhandensein eines solchen Bildes dieses aus dem Speicher ausgelesen und der Darstellungseinheit übergeben wird, wodurch bereits ein Bild des neu ausgewählten Rundfunkprogramms dargestellt wird, während der Rundfunkempfänger auf das neu ausgewählte Rundfunkprogramm umgeschaltet wird.

4. Verfahren nach Anspruch 3,
**dadurch gekennzeichnet, dass**
die vorgegebene Anzahl von Rundfunkprogrammen, welche durchsucht werden, zwischen eins und fünf liegt.

5. Verfahren nach Anspruch 3 oder 4,
**dadurch gekennzeichnet, dass**
die vorgegebene Anzahl von Rundfunkprogrammen im Programmspeicherplatz aufsteigender Nummer größer als die Anzahl der im Programmspeicherplatz absteigender Nummer gewählt wird.

6. Verfahren nach Anspruch 1 bis 5,
**dadurch gekennzeichnet, dass**
das Durchsuchen der nicht zur Darstellung ausgewählten degemultiplexten Rundfunkprogramme von einem Mikrocomputer vorgenommen wird, welcher zugleich die Steuerung des Rundfunkempfängers vornimmt.

7. Verfahren nach einem der Ansprüche 1 bis 6,
**dadurch gekennzeichnet, dass**
die Decodierung der Bilder der nicht zur Darstellung ausgewählten degemultiplexten Rundfunkprogramme von dem Mikrocomputer vorgenommen wird, wobei die Decodierung des ausgewählten Rundfunkprogramms von einem Hardwaredecoder vorgenommen wird.

8. Verfahren nach einem der Ansprüche 1 bis 7,
**dadurch gekennzeichnet, dass**
die Bilder im Speicher kontinuierlich von neuen Bildern überschrieben werden.

9. Verfahren nach einem der Ansprüche 1 bis 8,
**dadurch gekennzeichnet, dass**
der Mikrocomputer in Form einer Mikrocomputereinheit ausgestaltet wird.

10. Verfahren nach einem der Ansprüche 1 bis 9,
**dadurch gekennzeichnet, dass**
die Bilder I-Frames sind und diese von der Mikrocomputereinheit mittels einer auf der Mikrocomputereinheit implementierten Softwareroutine decodiert werden.

11. Verfahren nach einem der Ansprüche 1 bis 10,
**dadurch gekennzeichnet, dass**
der Videoengine von der Mikrocomputereinheit die Startadresse im Speicher übergeben wird, ab welcher der I-Frame abgelegt ist, der dem Rundfunkprogramm, auf welches umgeschaltet wird, zugeordnet ist, und dieser I-Frame von der Videoengine auf der Anzeigevorrichtung vom Hardwaredecoder dargestellt wird.

12. Rundfunkgerät mit einem Rundfunkempfänger (E), einer Mikrocomputereinheit (µC), einem Hardwaredecoder (HW), einem Speicher (S) und einem Demultiplexer (Demux), wobei der Rundfunkempfänger (E) von einem Sender zumindest ein in digital codierter Form übertragenes Rundfunksignal empfängt, wobei das mindestens eine Rundfunksignal mindestens einen Transportdatenstrom (TS) und jeder Transportdatenstrom (TS) mindestens ein Rundfunkprogramm (P1, P2, P3, P4) enthält, und auf Eingabe eines Nutzers die Mikrocomputereinheit (µC) einen Transportdatenstrom (TS) aus dem Rundfunksignal auswählt, dieser Transportdatenstrom (TS) vom Demultiplexer (Demux) demultiplext wird, wodurch alle im ausgewählten Transportdatenstrom (TS) enthaltenen Rundfunkprogramme (P1, P2, P3, P4) in degemultiplexter Form an den Ausgängen des Demultiplexers (Demux) vorliegen und die Mikrocomputereinheit (µC) ein Rundfunkprogramm (P1) aus dem Transportdatenstrom (TS) zur Darstellung auf einer Anzeigevorrichtung (DISP) an einen Hardwaredecoder (HW) leitet, der das Rundfunkprogramm (P1) decodiert und an eine Videoengine (V) übergibt, welche das decodierte Rundfunkprogramm (P1) zur Darstellung auf einer Anzeigevorrichtung (DISP) aufbereitet, wobei zusätzlich die Mikrocomputereinheit (µC) die weiteren, nicht zur Darstellung ausgewählten degemultiplexten Rundfunkprogramme (P2, P3, P4) des ausgewählten Transportdatenstroms (TS) nach in diesen enthaltenen codierten Bildern durchsucht und eines dieser Bilder in dem Speicher (S) speichert mit der Zuordnung einer Kennung für jedes Rundfunkprogramm zu den gespeicherten Bildern, wobei bei einer Initiierung eines Wechsels des darzustellenden Rundfunkprogramms (P1) auf eines der anderen Rundfunkprogramme (P2, P3, P4) die Mikrocomputereinheit (µC) die Umschaltung vornimmt und zugleich den Speicher (S) nach dem gespeicherten Bild, das dem anderen Rundfunkprogramm zugeordnet ist, durchsucht und dieses aus dem Speicher (S) ausliest und der Videoengine (V) zur Aufbereitung für die Darstellungsvorrichtung (DISP) übergibt, wodurch bereits ein Bild des neu ausgewählten Rundfunkprogramms dargestellt wird, während die Umschaltung auf das neu ausgewählte Rundfunkprogramm erfolgt.

13. Rundfunkgerät mit mindestens zwei Rundfunkempfängern (E1, E2), einer Mikrocomputereinheit (µC), einem Hardwaredecoder (HW), einem Speicher (S) und mindestens zwei Demultiplexern (Demux1, Demux2), wobei das Rundfunkgerät von einem Sender ein in digital codierter Form übertragenes Rundfunksignal empfängt, wobei das Rundfunksignal mindestens zwei Transportdatenströme (TS1, TS2) aufweist und jeder Transportdatenstrom (TS1, TS2) mindestens ein Rundfunkprogramm enthält und auf Eingabe eines Nutzers die Mikrocomputereinheit (µC) einen ersten Transportdatenstrom (TS1) aus dem Rundfunksignal auswählt, der erste Demultiplexer (Demux1) diesen ersten Transportdatenstrom (TS1) demultiplext, wodurch alle im ersten Transportdatenstrom (TS1) enthaltenen Rundfunkprogramme (P11, P12, P13, P14) in degemultiplexter Form an den Ausgängen des ersten Demultiplexers (Demux1) vorliegen, und die Mikrocomputereinheit (µC) ein erstes Rundfunkprogramm (P1) aus dem ersten Transportdatenstrom (TS1) zur Darstellung auf einer Anzeigevorrichtung (DISP) an einen Hardwaredecoder (HW) leitet, der das erste Rundfunkprogramm (P11) decodiert und an eine Videoengine (V) übergibt, welche das decodierte erste Rundfunkprogramm (P11) zur Darstellung auf der Anzeigevorrichtung (DISP) aufbereitet, wobei zusätzlich die Mikrocomputereinheit (µC) die weiteren, nicht zur Darstellung ausgewählten degemultiplexten Rundfunkprogramme (P12, P13, P14) des ersten ausgewählten Transportdatenstroms (TS1) nach in diesen enthaltenen codierten Bildern durchsucht und ein Bild eines jeden, nicht zur Darstellung ausgewählten degemultiplexten Rundfunkprogramms (P12, P13, P14) in dem Speicher (S) speichert mit der Zuordnung einer Kennung für jedes nicht zur Darstellung ausgewählten degemultiplexten Rundfunkprogramms (P12, P13, P14), und der zweite Rundfunkempfänger (E2) den mindestens zweiten Transportdatenstrom (TS2) empfängt und der zweite Demultiplexer (Demux2) den mindestens zweiten Transportdatenstrom (TS2) demultiplext, die Mikrocomputereinheit (µC) die Rundfunkprogramme (P21, P22, P23, P24), die im mindestens zweiten Transportdatenstrom (TS2) vorhanden sind, nach decodierten Bildern durchsucht und diese ebenfalls mit einer Kennung zum zugehörigen Rundfunkprogramm (P21, P22, P23, P24) im Speicher (S) speichert und bei einer Initiierung eines Wechsels des darzustellenden Rundfunkprogramms (P11) auf eines der anderen Rundfunkprogramme (P12 bis P34) die Mikrocomputereinheit (µC) die Umschaltung vornimmt und zugleich im Speicher (S) nach dem gespeicherten Bild, das dem anderen Rundfunkprogramm zugeordnet ist, durchsucht und aus dem Speicher (S) ausliest und der Videoengine (V) zur Aufbereitung für die Darstellungsvorrichtung (DISP) übergibt, wodurch bereits ein Bild des neu ausgewählten Rundfunkprogramms dargestellt wird, während die Umschaltung auf das neu ausgewählte Rundfunkprogramm erfolgt.

14. Rundfunkgerät mit mindestens zwei Rundfunkempfängern (E1, E2), einer Mikrocomputereinheit (µC), einem Hardwaredecoder (HW), einem Speicher (S) und mindestens zwei Demultiplexern (Demux1, Demux2) und einem Programmplatzspeicher, in welchem jedem empfangbaren Rundfunkprogramm ein Programmspeicherplatz zuordenbar ist, wobei das Rundfunkgerät von einem Sender ein in digital codierter Form übertragenes Rundfunksignal empfängt, wobei das Rundfunksignal mindestens zwei Transportdatenströme (TS1, TS2) aufweist und jeder Transportdatenstrom (TS1, TS2) mindestens ein Rundfunkprogramm enthält und auf Eingabe eines Nutzers die Mikrocomputereinheit (µC) einen ersten Transportdatenstrom (TS1) aus dem Rundfunksignal auswählt, der erste Demultiplexer (Demux1) diesen ersten Transportdatenstrom (TS1) demultiplext, wodurch alle im ersten Transportdatenstrom (TS1) enthaltenen Rundfunkprogramme (P11, P12, P13, P14) in degemultiplexter Form an den Ausgängen des ersten Demultiplexers (Demux1) vorliegen und die Mikrocomputereinheit (µC) ein erstes Rundfunkprogramm (P1) aus dem ersten Transportdatenstrom (TS1) zur Darstellung auf einer Anzeigevorrichtung (DISP) an einen Hardwaredecoder (HW) leitet, der das erste Rundfunkprogramm (P11) decodiert und an eine Videoengine (V) übergibt, welche das decodierte erste Rundfunkprogramm (P11) zur Darstellung auf der Anzeigevorrichtung (DISP) aufbereitet, wobei zusätzlich die Mikrocomputereinheit (µC) die dem ersten Rundfunkprogramm (P11), welches zur Darstellung auf der Anzeigevorrichtung (DISP) aufbereitet wird, im Programmplatzspeicher nachfolgenden und/oder vorausgehenden Rundfunkprogramme nach in diesen enthaltenen codierten Bildern durchsucht und ein Bild eines jeden dieser Rundfunkprogramme in dem Speicher (S) speichert mit der Zuordnung einer Kennung für jedes dieser Rundfunkprogramme unter Verwendung des zweiten Rundfunkempfängers (E2) und bei einer Initiierung eines Wechsels des darzustellenden Rundfunkprogramms (P11) auf eines dieser Rundfunkprogramme die Mikrocomputereinheit (µC) die Umschaltung vornimmt und zugleich im Speicher (S) nach dem gespeicherten Bild, das einem dieser Rundfunkprogramme zugeordnet ist, durchsucht und aus dem Speicher (S) ausliest, soweit ein solches Bild gespeichert ist, und der Videoengine (V) zur Aufbereitung für die Darstellungsvorrichtung (DISP) übergibt, wodurch bereits ein Bild des neu ausgewählten Rundfunkprogramms dargestellt wird, während die Umschaltung auf das neu ausgewählte Rundfunkprogramm erfolgt.

15. Vorrichtung nach Anspruch 13,
**dadurch gekennzeichnet, dass**
die Mikrocomputereinheit (µC) alle im Rundfunksignal enthaltenen Transportdatenströme mittels des zweiten Rundfunkempfängers (E2) empfängt und der zweite Demultiplexer (Demux2) diese demultiplext und die Mikrocomputereinheit (µC) alle im Transportdatenstrom enthaltenen Bilder von zugehörigen Rundfunkprogrammen mit Zuordnung einer Kennung im Speicher (S) speichert.

16. Vorrichtung nach einem der Ansprüche 12 bis 15,
**dadurch gekennzeichnet, dass**
die Bilder, welche die Mikrocomputereinheit (µC) in den Rundfunkprogrammen sucht und im Speicher (S) speichert, codierte Bilddaten sind und den I-Frames eines MPEG-codierten Videosignals entsprechen.

17. Vorrichtung nach einem der Ansprüche 12 bis 16,
**dadurch gekennzeichnet, dass**
die die Mikrocomputereinheit (µC) die Bilder im Speicher (S) kontinuierlich mit zeitlich nachfolgenden Bildern überschreibt.

18. Vorrichtung nach einem der Ansprüche 12 bis 17,
**dadurch gekennzeichnet, dass**
die Decodierung der Bilder von der Mikrocomputereinheit (µC) mittels einer auf dieser implementierten Softwareroutine erfolgt.

19. Vorrichtung nach einem der Ansprüche 12 bis 18,
**dadurch gekennzeichnet, dass**
die Decodierung der Bilder von der Mikrocomputereinheit (µC) bei der ersten Speicherung oder in einem nachfolgenden Schritt erfolgt.

20. Vorrichtung nach einem der Ansprüche 12 bis 19,
**dadurch gekennzeichnet, dass**
die Mikrocomputereinheit (µC) der Videoengine (V) die Startadresse im Speicher (S) übergibt, ab welcher ein Bild, das dem Rundfunkprogramm zugehört, auf welches umgeschaltet wird, liegt, damit dieses Bild von der Videoengine (V) der Anzeigevorrichtung (DISP) zur Darstellung übergeben werden kann, um dieses Bild darzustellen, bis das neu ausgewählte Rundfunkprogramm dargestellt wird.
